# FASCICULE DE BREVET EUROPEEN

(11) **EP 2 127 943 B1**
(45) Date de publication et mention de la délivrance du brevet: **23.03.2011**
(21) Numéro de dépôt: 09360026.0
(22) Date de dépôt: 14.05.2009
(51) Int. Cl.: B60N 2/68

(54) **Corps de dossier de siège rabattable pour véhicule**
Klappbarer Lehnenkörper für ein Fahrzeug
Tilting backrest body for a vehicle

(30) Priorité: 16.05.2008 FR 0802651
(43) Date de publication de la demande: 02.12.2009
(73) Titulaire: Rehau SA, 57340 Morhange (FR)
(72) Inventeur: Pennerath, Eddy, 57450 Henriville (FR)
(74) Mandataire: Metz, Paul

(56) Documents cités:
- WO-A-01/92051
- DE-A1- 19 728 052
- US-A- 4 493 505

## Description

La présente invention concerne un dossier rabattable de siège pour véhicule, dont le corps est réalisé en matière plastique soufflée.

La présente invention concerne plus précisément un corps de dossier rabattable de siège, réalisé en matière plastique par soufflage et à rigidité améliorée par deux armatures latérales de chant et un élément longitudinal de torsion.

Les dossiers rabattables de sièges de véhicule sont généralement formés d'un corps rigide sensiblement plan sur lequel on rajoute une matière de rembourrage, l'ensemble étant ensuite recouvert extérieurement d'un habillage par exemple en matière textile, en matière synthétique ou en cuir.

Le corps de ces sièges se présente classiquement sous la forme d'une tôle métallique emboutie sur laquelle un ou plusieurs tubes métalliques cintrés sont soudés afin de former un cadre périphérique complet servant d'armature de rigidification. La tôle métallique peut comporter en outre un grand nombre de nervures afin d'améliorer encore sa rigidité. Un corps de dossier de ce type a par exemple été décrit dans le brevet US 4.493.505A au nom de TAKESHI YAMAWAKI.

Les corps de dossier rabattable obtenus présentent ainsi une grande rigidité. Cependant, ils sont relativement chers du fait des matériaux utilisés et de leur procédé de fabrication qui requiert de nombreuses étapes. En outre, ils sont également assez lourds ce qui est particulièrement désavantageux dans le domaine automobile.

Le but de l'invention est de réaliser ces corps de dossier rabattable non plus en métal, mais en matière plastique soufflée, comme par exemple dans la demande de brevet DOW CHEMICAL WO 01/92051A.

Les corps de dossier ainsi obtenus se révèlent nettement moins chers, beaucoup plus légers et présentent de nombreux avantages supplémentaires.

On peut ainsi les conformer très facilement et directement lors de l'opération de moulage par soufflage selon la forme souhaitée, par exemple selon une forme ergonomique et anatomique.

Dans le cas où il s'agit d'un dossier de siège rabattable et escamotable, sa face avant peut être conformée selon une forme ergonomique et anatomique alors que sa face arrière peut être réalisée plate de façon à former un panneau de plancher de coffre une fois le dossier de siège rabattu en position horizontale escamotée.

Avantageusement, la face arrière du corps de dossier peut déjà être réalisée lors de l'étape de soufflage avec la finition correspondant à celle du véhicule à équiper, de manière à former un plancher de coffre uniforme une fois le siège rabattu en position escamotée.

Plusieurs niveaux de finition peuvent facilement être obtenus dès le moulage, la face arrière du corps de dossier pouvant par exemple être réalisée en matière plastique grainée ou être recouverte de moquette.

En outre, le corps du dossier de siège selon l'invention est une pièce creuse en matière plastique soufflée. Elle est donc plus volumineuse que les corps de l'art antérieur formés d'une plaque métallique. La quantité de mousse de rembourrage nécessaire à la fabrication du dossier de siège peut de ce fait être plus limitée, conduisant encore à une économie supplémentaire.

Enfin, le corps du dossier selon l'invention constitue un espace creux protégé qui peut avantageusement être utilisé pour y intégrer divers éléments fonctionnels du véhicule, tels que par exemple des conduits d'air de ventilation, de chauffage ou de climatisation, des composants électroniques, un logement de rangement ou autres.

Les dossiers rabattables de sièges de véhicule doivent toutefois présenter une rigidité importante pour être acceptables et respecter les différentes normes, notamment de sécurité, les concernant.

En effet, ces dossiers de siège sont soumis à de nombreuses contraintes et subissent des efforts très importants, notamment en cas de chocs.

Ils doivent en particulier résister sans être perforés à une projection d'objets venant de l'arrière, par exemple des valises placées dans le coffre et projetées en direction des sièges en cas de freinage brutal.

Des éléments de retenue et de sécurité sont également montés sur ces dossiers de sièges. Il s'agit notamment des fixations des ceintures de sécurité, des fixations pour sièges bébé ou mêmes des appui-tête. Tous ces éléments génèrent, en cas de chocs ou de freinage brutal, de fortes contraintes de torsion et de flexion sur les zones adjacentes du dossier.

Or, les dossiers rabattables de siège automobile ne sont généralement retenus que par trois points de fixation : en bas au niveau de deux charnières latérales et en haut par une fixation latérale uniquement sur le côté extérieur du véhicule.

Pour résister à toutes ces contraintes malgré leur faible retenue, les dossiers rabattables de siège doivent présenter une grande rigidité.

Le problème est accru lorsqu'il s'agit de dossiers de grande largueur, notamment de dossiers de banquette arrière qui servent à la fois de dossier pour la place centrale et l'une des places latérales et qui ne sont également retenus que par trois points de fixation.

Le coin supérieur intérieur de ces dossiers reste souvent libre. De ce fait, le dossier est soumis à de fortes sollicitations du fait de la présence des fixations de la ceinture de sécurité du passager central ou des fixations d'un éventuel siège bébé fixé sur la place centrale. Il a donc besoin d'une très bonne rigidité en flexion et en torsion pour pouvoir résister aux contraintes exercées lors d'un accident.

En outre, certains véhicules présentent à l'arrière une rangée de sièges escamotables dont le dossier peut basculer pour, au choix, former un siège ou agrandir le coffre. Lorsque ces sièges sont en position escamotée, la face arrière de leur dossier affleure avec le plancher du coffre du véhicule et constitue une prolongation de celui-ci. Des bagages lourds ou d'autres chargements de poids important peuvent alors être placés sur le dossier de siège comme dans le reste du coffre. Le dossier de siège doit donc présenter une rigidité suffisante pour résister à l'enfoncement et ne pas se voiler sous le poids.

Pour toutes ces raisons, ces dossiers de sièges doivent présenter une grande rigidité pour résister aux efforts importants qu'ils peuvent potentiellement subir et satisfaire aux différentes normes qui leurs sont imposées.

Si les corps de dossier de siège en matière plastique soufflée présentent de nombreux avantages précédemment évoqués, leur rigidité est nettement inférieure à celle des corps de dossier métalliques.

Pour améliorer la rigidité des pièces soufflées, il est fréquent dans l'art antérieur de former lors du soufflage des plots de rigidification par étirement et rapprochement localisé de l'une des parois en direction de l'autre paroi jusqu'à jonction par thermosoudage des deux parois à ce niveau.

Cependant, cette technique reste insuffisante pour procurer la rigidité nécessaire à ce type d'application.

Le but de l'invention est de fournir une pièce globalement plane en matière plastique soufflée à rigidité améliorée et dont la résistance à la flexion, à la torsion et à l'enfoncement est suffisante pour pouvoir être utilisée comme corps de dossier rabattable de siège arrière escamotable pour véhicule, même dans le cas d'une banquette arrière de grande largueur.

Pour résoudre ce problème technique, l'invention enseigne un corps de dossier rabattable de siège pour véhicule, notamment automobile, creux et de forme globalement plane, réalisé en matière plastique par un procédé de moulage par soufflage. Ce corps de dossier comprend une paroi avant et une paroi arrière, réunies par un chant supérieur, un chant inférieur et deux chants latéraux, l'ensemble de ces parois et de ces chants délimitant un volume intérieur creux fermé.

Selon l'invention, ce corps de dossier de siège comporte pour améliorer sa rigidité,une armature latérale de chant rigide sur chacun de ses chants latéraux caractérisé en ce qu'il comporte en outre un élément longitudinal de torsion, disposé en partie inférieure, dont les extrémités sont reliées chacune à l'armature latérale de chant correspondante, et en ce que les armatures latérales de chant ne sont reliées entre elles qu'en partie inférieure du corps de siège par l'intermédiaire de l'élément longitudinal de torsion.

L'invention enseigne également un siège escamotable pour véhicule, notamment automobile, qui comporte une assise et un dossier rabattable, et dont le dossier rabattable comprend un corps de dossier selon l'invention.

D'autres caractéristiques et avantages de l'invention sont décrits dans les revendications dépendantes et apparaîtront à la lecture de la description détaillée qui va suivre, description faite en référence aux dessins annexés, dans lesquels :
- la figure 1 est une vue en perspective d'un corps de dossier rabattable de siège à tube de torsion interne selon une première variante de l'invention ;
- la figure 2 est une vue en coupe transversale du corps de dossier de siège de la figure 1, au niveau d'un plot interne de rigidification ;
- la figure 3 est une vue en coupe transversale du corps de dossier de siège de la figure 1, au niveau de son tube de torsion ;
- la figure 4 est une vue en perspective du corps de dossier de siège de la figure 1 avant mise en place du tube de torsion ;
- la figure 5 est une vue en perspective d'un corps de dossier rabattable de siège à tube de torsion externe selon une deuxième variante de l'invention ;
- la figure 6 est un agrandissement de la zone de raccordement entre le tube externe de torsion et l'armature latérale de chant du corps de dossier de siège de la figure 5 ;
- la figure 7 est une vue en perspective d'un corps de dossier rabattable de siège à tube de torsion externe selon une troisième variante de l'invention ;
- la figure 8 est une vue en perspective d'un détail d'un corps de dossier de siège à tube de torsion interne selon une quatrième variante de l'invention, illustrant la zone de raccordement entre le tube interne de torsion et l'une des armatures latérales de chant ;
- la figure 9 est une vue partielle en coupe transversale du corps de dossier de siège de la figure 8, au niveau de l'extrémité de son tube interne de torsion.

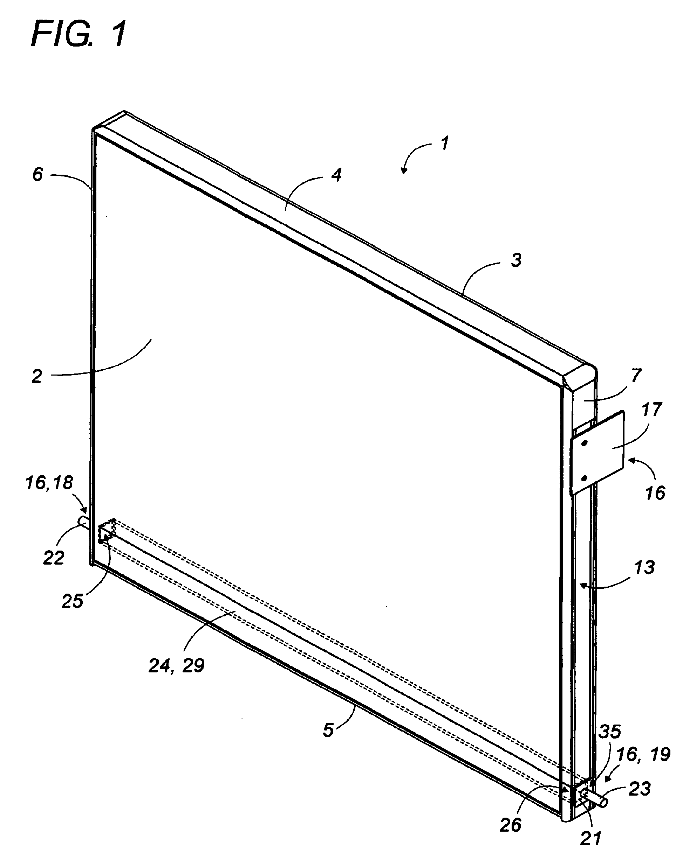

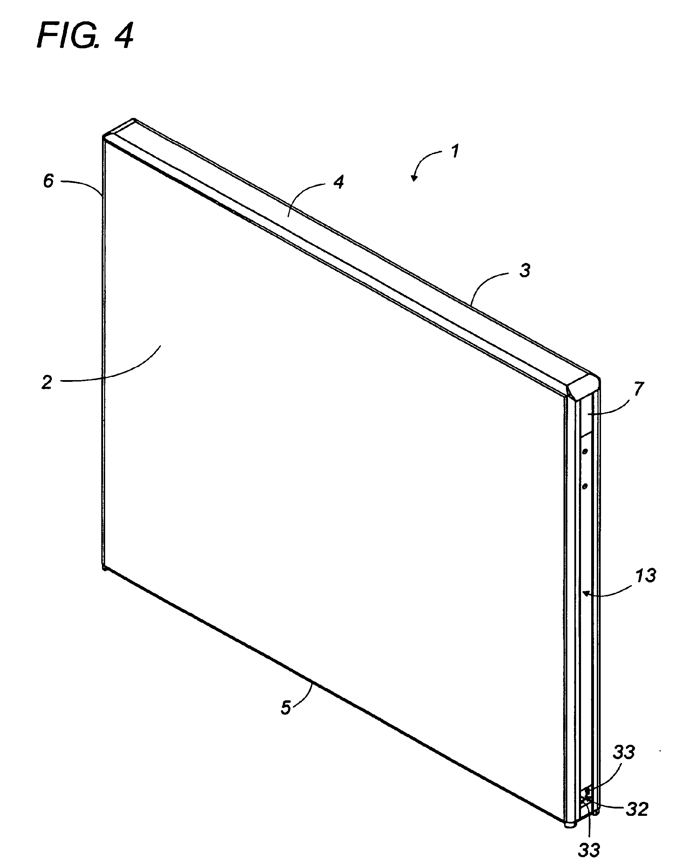

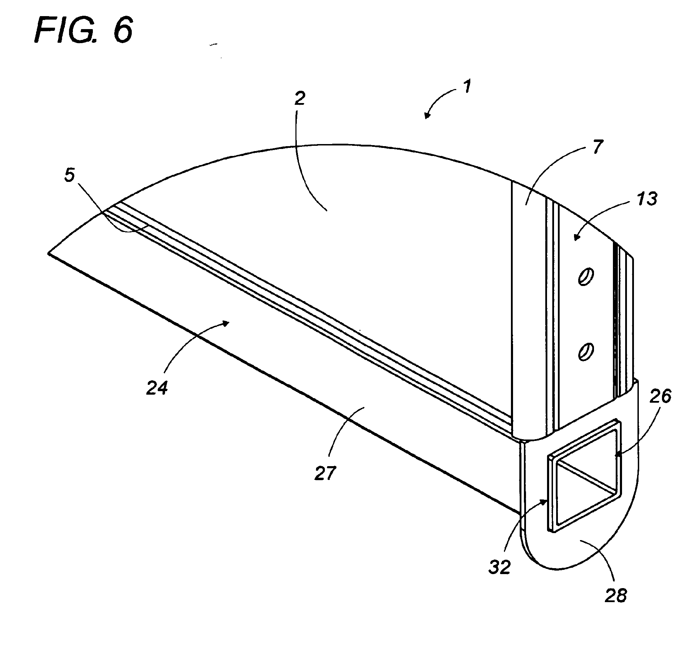

Le corps de dossier rabattable de siège en matière plastique soufflée et à rigidité améliorée selon la présente invention va maintenant être décrit de façon détaillée en référence aux figures 1 à 9. Les éléments équivalents représentés sur les différentes figures porteront les mêmes références numériques.

Sur les différentes figures, on a représenté schématiquement un corps 1 de dossier rabattable de siège selon l'invention sous la forme d'un volume plan parallélépipédique. Il doit être bien entendu qu'il peut affecter différentes formes particulières notamment dans sa partie centrale, en particulier des formes ergonomiques et anatomiques.

Il s'agit d'une pièce creuse en matière plastique réalisée, préférentiellement d'une seule pièce, par un procédé de moulage par soufflage largement connu de l'homme du métier.

Le corps 1 de dossier rabattable selon l'invention comporte deux parois frontales principales : une paroi avant 2 et une paroi arrière 3, ainsi qu'un ensemble de chants comprenant par exemple un chant supérieur 4, un chant inférieur 5 et deux chants latéraux 6 et 7. Entre ces différentes parois et chants se trouve un volume intérieur creux 8 fermé.

Le corps 1 selon l'invention présente une forme globalement plane. Il ne s'agit cependant que d'une forme générale, le corps de dossier pouvant selon les applications présenter sur l'une de ses faces ou sur ses deux faces des formes techniques ou esthétiques quelconques adaptées aux exigences de style de l'application, par exemple convexes, concaves ou avec des nervures ou des renfoncements.

Selon un mode de réalisation préférentiel de l'invention, la paroi avant 2 du corps de dossier 1 peut par exemple présenter une forme ergonomique adaptée pour recevoir confortablement le dos d'un passager.

La paroi arrière 3 du corps 1 peut au contraire rester parfaitement plate de manière à pouvoir constituer une prolongation du plancher de coffre dans le cas d'un siège escamotable.

La conformation du corps 1 de dossier s'effectue dans un moule à partir d'une paraison tubulaire chauffée et ramollie qui est plaquée contre les parois du moule par un gaz de soufflage selon des techniques connues.

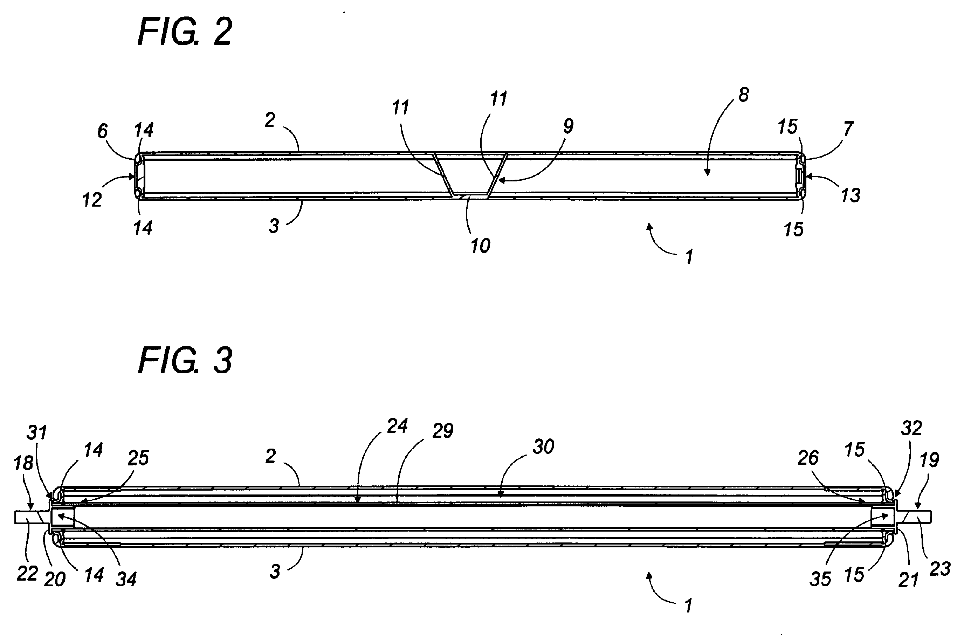

Afin d'augmenter sa rigidité, le corps 1 de dossier présente dans son volume intérieur 8 un certain nombre de plots de rigidification internes 9 (figure 2) qui sont formés simultanément pendant l'étape de moulage.

Pour cela, des reliefs s'élevant de la face intérieure de l'une des parties du moule viennent déformer localement l'une des parois principales du corps 1 de dossier de siège et l'étirent en direction de la deuxième paroi principale en regard, jusqu_{'}à provoquer la jonction par thermosoudage de ces deux parois au niveau de zones de jonction 10 localisées.

Des plots de rigidification internes 9, dont les parois latérales 11 servent d'entretoises entre les deux parois principales 2 et 3 du corps 1 soufflé, sont ainsi constitués.

Les plots 9 peuvent indifféremment être réalisés par déformation de la paroi avant 2 ou de la paroi arrière 3 du corps 1, voire même par déformation de la paroi avant 2 pour certains des plots 9 et par déformation de la paroi arrière 3 pour les autres.

Dans le cas où l'une des parois principales du corps 1 de dossier de siège est une paroi d'aspect qui demeure visible par l'utilisateur dans sa configuration finale d'utilisation, les plots de rigidification internes 9 sont préférentiellement réalisés par déformation de l'autre paroi.

Ainsi par exemple, dans les véhicules automobiles, la paroi arrière 3 du corps de dossier reste souvent visible par l'utilisateur alors que la paroi avant 2 est recouverte de matériaux de rembourrage, puis d'un habillage. Les plots de rigidification 9 sont donc préférentiellement formés à partir de la paroi avant 2.

Le volume intérieur 8 peut renfermer en outre d'autres moyens de renfort connus non représentés, tels qu'une armature ou des inserts quelconques, par exemple métalliques ou en matière plastique rigide.

Grâce à ces moyens supplémentaires de renfort, on peut améliorer la résistance du dossier à la perforation pouvant être occasionnée en cas de freinage brutal par la projection de bagages lourds placés dans le coffre.

Selon l'invention, le corps 1 de dossier de siège comporte des pièces de renfort, appelées ci-après armatures latérales de chant 12 et 13, disposées chacune respectivement au niveau de l'un des chants latéraux 6 et 7 du corps 1 de dossier.

Ces armatures latérales de chant sont des pièces rigides, de préférence de forme générale plate, qui s'étendent préférentiellement sur sensiblement toute la longueur des chants latéraux 6 et 7 de manière à renforcer latéralement le corps 1 de dossier de siège. Cependant, elles peuvent aussi être limitées uniquement à la partie inférieure du corps de dossier où la sollicitation est la plus importante, pour diminuer le prix de revient et le poids de l'ensemble.

Les armatures latérales de chant sont de préférence métalliques. Elles peuvent également être réalisées en matière plastique rigide, par exemple en une résine thermodurcissable chargée en fibres de verre. Dans ce dernier cas, elles peuvent avantageusement être obtenues par des procédés de moulage communément appelés « SMC » (« Sheet Molding Coumpound » ou en français « préimprégné ») ou « BMC » (« Bulk Molding Compound » ou en français « prémix ») par l'homme du métier.

La possibilité de réaliser les armatures latérales de chant 12, 13 en matière plastique rigide offre de nombreux avantages :
Hormis le gain de poids et le fait que le prix de revient est généralement plus faible, le moulage procure une liberté de forme beaucoup plus grande que notamment l'emboutissage d'une tôle métallique. On peut ainsi obtenir pour ces armatures de chant 12 et 13 une forme en trois dimensions précise et complexe et réaliser plus facilement et efficacement les zones d'ancrage de ces armatures. On peut également intégrer d'autres fonctions à ces armatures par moulage, notamment les moyens de fixation au véhicule comme on le verra par la suite.

De plus, les matériaux plastiques du corps de dossier et des armatures latérales de chant présentant une plus grande affinité entre eux, une meilleure cohésion peut être obtenue entre ces éléments lors de l'opération de moulage par soufflage.

Enfin, lorsque ces armatures latérales de chant 12 et 13 doivent rester apparentes, elles peuvent être directement teintées dans la masse au moulage, ce qui évite une étape ultérieure de peinture ou la pose d'un cache de recouvrement nécessaire avec des pièces métalliques.

Ces deux armatures 12 et 13 sont préférentiellement identiques, symétriques ou similaires.

Les armatures latérales de chant 12 et 13 peuvent avantageusement être directement solidarisées au corps 1 de dossier de siège lors de l'opération de moulage par soufflage de celui-ci.

Pour cela, ces armatures présentent préférentiellement des bords longitudinaux d'ancrage, par exemple incurvés, tels que 14 pour l'armature 12 et 15 pour l'armature 13, qui sont enchâssés à maintien dans la matière plastique constituant le corps 1 de dossier et se retrouvent noyés dans celle-ci lors de l'opération de soufflage. Ils permettent ainsi un bon ancrage et une fixation forte des armatures latérales de chant 12, 13 métalliques dans la matière plastique du corps de dossier 1 par recouvrement et prise en sandwich de leurs bords longitudinaux d'ancrage.

Les armatures latérales de chant 12 et 13 peuvent être situées indifféremment du coté extérieur ou du côté intérieur du chant latéral 6 ou 7 qu'elles renforcent.

Elles peuvent également présenter une forme différente de celle représentée. On peut ainsi imaginer une armature latérale réalisée sous la forme d'une plaque de tôle pliée en U, venant se chausser sur le bord latéral correspondant du corps de dossier de siège et dont les retours seraient en appui contre les parois avant 2 et arrière 3 du corps 1.

On peut également prévoir par exemple une armature tubulaire placée à l'intérieur du corps de dossier 1 à proximité du chant latéral 6 ou 7 correspondant. D'autres formes pourront être imaginées par l'homme du métier.

Les deux armatures latérales de chant 12 et 13 ne sont pas forcément identiques, l'une pouvant être par exemple extérieure et se présenter éventuellement sous la forme d'une plaque pliée en U, et l'autre pouvant être intérieure et éventuellement tubulaire.

Le corps 1 de dossier de siège est classiquement destiné à être fixé au véhicule par trois points de fixation situés au niveau de ses chants latéraux 6 et 7, pour l'un en partie supérieure du chant tourné vers le côté extérieur du véhicule, le chant 7 sur l'exemple représenté, et pour les deux autres chacun en partie inférieure de l'un des chants latéraux 6 et 7.

Le corps de dossier de siège comporte pour cela des moyens de fixation 16 au véhicule, complémentaires de ceux portés par le véhicule.

Il s'agit par exemple, comme on peut le voir sur la figure 1, d'une plaque de fixation 17 disposée en partie supérieure du chant latéral 7, et de deux charnières latérales 18 et 19 situées chacune en partie inférieure de l'un des chants latéraux 6 ou 7.

Sur l'exemple représenté, chacune de ces charnières 18, 19 est formée d'une platine de base 20, 21 de laquelle s'élève un bout d'axe de pivotement 22, 23 cylindrique. Ce bout d'axe de pivotement 22, 23 est destiné à être reçu dans une ouverture correspondante de la partie fixe complémentaire de la charnière portée par le véhicule. Bien entendu, ces moyens complémentaires peuvent être inversés, le bout d'axe de pivotement pouvant appartenir à la partie de la charnière fixée au véhicule et l'ouverture de réception étant alors réalisée dans la platine de base 20, 21 de la charnière 18, 19 du corps 1 de dossier de siège.

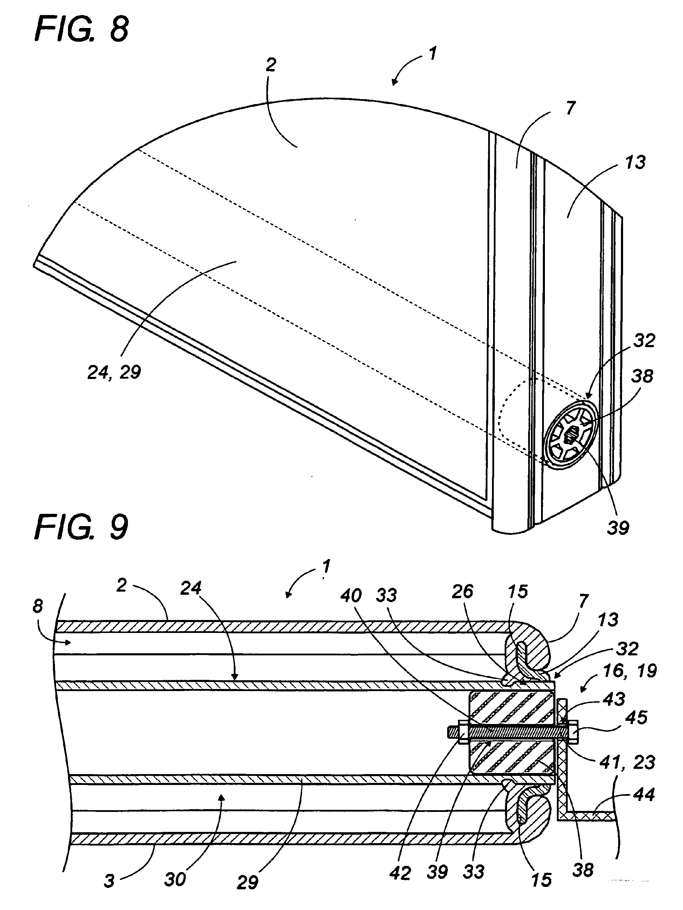

Un autre exemple de charnière 19 a été représenté sur la figure 9 et sera décrit par la suite.

Ces charnières 18 et 19 permettent le pivotement en rabattement du dossier de siège entre ses deux positions limites caractéristiques à savoir droite relevée et couchée rabattue. Elles peuvent également permettre le réglage de l'inclinaison du dossier de siège.

Selon un mode de réalisation préférentiel de l'invention, les armatures latérales de chant 12 et 13 peuvent avantageusement porter ces moyens de fixation 16 et leur servir de support de montage. Les moyens de fixation 16 au véhicule peuvent ainsi être rapportés sur l'armature latérale de chant correspondante par vissage, boulonnage, rivetage, soudage ou tout autre moyen approprié.

Lorsque les armatures latérales de chant sont métalliques, le montage des moyens de fixation 16 est généralement plus facile, plus rapide et plus solide que s'ils devaient être rapportés sur la matière plastique du corps 1 de dossier de siège.

Un ou plusieurs de ces moyens de fixation 16 peuvent également être directement réalisés d'une pièce avec l'armature latérale de chant correspondante.

Dans le cas où les armatures latérales de chant 12, 13 sont en matière plastique, ces moyens de fixation 16 sont préférentiellement moulés d'une pièce avec l'armature latérale de chant correspondante.

Selon l'invention, le corps 1 de dossier rabattable de siège comporte également un élément longitudinal de torsion 24 disposé en partie inférieure du corps de dossier, intégré à celui-ci ou déporté à l'extérieur.

Cet élément longitudinal de torsion 24 constitue un moyen de résistance au mouvement de gauchissement du plan du dossier et coopère avec les armatures latérales de chant 12 et 13 pour améliorer la rigidité du corps 1 de dossier de siège.

La rigidité en torsion de cet élément permet de rendre la déformation du corps de dossier plus difficile. En effet, toute sollicitation tendant à gauchir le dossier se traduit par un effort en torsion de la partie inférieure du dossier auquel s'oppose l'élément longitudinal de torsion 24.

Afin de remplir sa fonction de façon satisfaisante, l'élément longitudinal de torsion 24 doit présenter une grande rigidité. Il est ainsi préférentiellement métallique. Cependant, il est également envisageable de le réaliser en matière plastique rigide, ce qui procure un gain de poids avantageux. L'élément longitudinal de torsion 24 peut ainsi notamment être réalisé par un procédé de pultrusion par exemple en polyester fortement chargé en fibres de verre.

Chaque extrémité, respectivement 25 et 26, de l'élément longitudinal de torsion 24 est reliée à l'armature latérale de chant correspondante 12 ou 13 du corps de dossier 1 de manière à rigidifier l'ensemble et à transmettre les efforts entre les différents éléments de rigidification. La combinaison de l'élément longitudinal de torsion 24 et des armatures latérales de chant 12 et 13 permet ainsi d'opposer une résistance suffisante par rapport aux exigences des normes de sécurité à la déformation du corps du dossier.

Les extrémités 25 et 26 de l'élément longitudinal de torsion 24 sont reliées aux armatures latérales de chant 12 et 13 soit directement, soit au moyen de pièces intermédiaires de liaison, par exemple telles que 27 et 28.

Selon une variante préférentielle de l'invention, l'élément longitudinal de torsion 24 se présente sous la forme d'un tube de torsion 29, par exemple de section ronde, ovale ou préférentiellement carrée ou rectangulaire.

Le tube de torsion 29 peut affecter une forme de section quelconque du moment que son immobilisation en rotation est garantie du fait d'un blocage par le corps 1 de dossier et/ou par sa liaison avec les armatures latérales de chant 12, 13.

Des formes préférées sont celles qui assurent un blocage d'immobilisation de chaque extrémité 25, 26 de l'élément longitudinal de torsion 24 en coopération avec l'armature latérale de chant 12, 13 correspondante.

Concernant la forme circulaire, qui est une forme courante de section pour les tubes, on peut par exemple garantir l'immobilisation par un méplat, une rainure, une découpe selon une corde du périmètre circulaire ou un écrasement de l'extrémité ou tout autre moyen.

Trois exemples de réalisation de cet élément longitudinal de torsion 24 ont été représentés sur les figures annexées.

Selon la première variante représentée sur les figures 1 à 4, l'élément longitudinal de torsion 24 est un tube de torsion 29 de section carrée, s'étendant à l'intérieur du corps 1 de dossier, dans un logement 30 de forme adaptée ou complémentaire, situé en partie inférieure du corps. Ce logement 30 peut simplement être une partie du volume intérieur creux 8 du corps 1 de dossier, libre de plots de rigidification internes 9.

Chaque extrémité 25, 26 du tube de torsion 29 vient traverser une ouverture de réception, respectivement 31 et 32, ménagée dans la partie inférieure de l'armature latérale de chant 12, 13 correspondante, assurant ainsi une liaison entre l'élément longitudinal de torsion 24 et les armatures latérales de chant 12, 13.

Avantageusement, les ouvertures 31 et 32 peuvent être prévues de taille et de forme adaptées pour que les extrémités 25 et 26 du tube de torsion viennent s'y loger à immobilisation, par exemple de forme complémentaire à la forme de section des extrémités 25, 26.

Sur l'exemple représenté, les ouvertures 31 et 32 sont de forme carrée. L'immobilisation résultant de la coopération de la forme des extrémités 25, 26 du tube de torsion 29 avec celle des ouvertures de réception 31, 32 est ainsi garantie.

L'élément longitudinal de torsion 24 est préférentiellement mis en place dans son logement 30 postérieurement au moulage par soufflage du corps 1 de dossier.

Il est alors inséré et poussé longitudinalement dans son logement 30 à partir de l'une des ouvertures de réception 31, 32 des armatures latérales de chant 12, 13. Pour cela, des ouvertures correspondantes, ménagées dans la matière plastique du corps 1 de dossier, doivent évidemment être laissées libres au moulage à l'arrière des ouvertures de réception 31, 32.

Cependant, il est également envisageable que l'élément longitudinal de torsion 24 soit placé dans le moule de soufflage et soit ainsi directement intégré au corps 1 de dossier dès son moulage par soufflage.

Avantageusement, l'élément longitudinal de torsion 24 peut être bloqué longitudinalement par des petits bourrelets 33 de matière plastique, réalisés lors du moulage par soufflage.

De préférence, un bouchon d'obturation, respectivement 34 et 35, vient s'encastrer à chaque extrémité 25, 26 du tube de torsion 29. Ces bouchons d'obturation 34 et 35 comportent préférentiellement un flasque ou une extension s'étendant au-delà de la limite périphérique du tube de torsion 29 afin de compléter son blocage longitudinal en s'opposant au coulissement du tube de torsion 29 hors de son logement 30.

Comme représenté, ces bouchons d'obturation 34, 35 peuvent avantageusement porter les charnières latérales 18 et 19 du dossier de siège. Dans ce cas, la partie extérieure des bouchons 34, 35 est préférentiellement conformée de manière à constituer la platine de base 20, 21 et le bout d'axe de pivotement 22, 23 ou l'ouverture de réception de la charnière latérale 18, 19 considérée.

Les charnières latérales 18 et 19 sont ainsi fermement fixées par une liaison directe à l'élément longitudinal de torsion 24, qui est préférentiellement métallique et dans tous les cas extrêmement rigide, et non pas simplement à la matière plastique soufflée du corps de dossier.

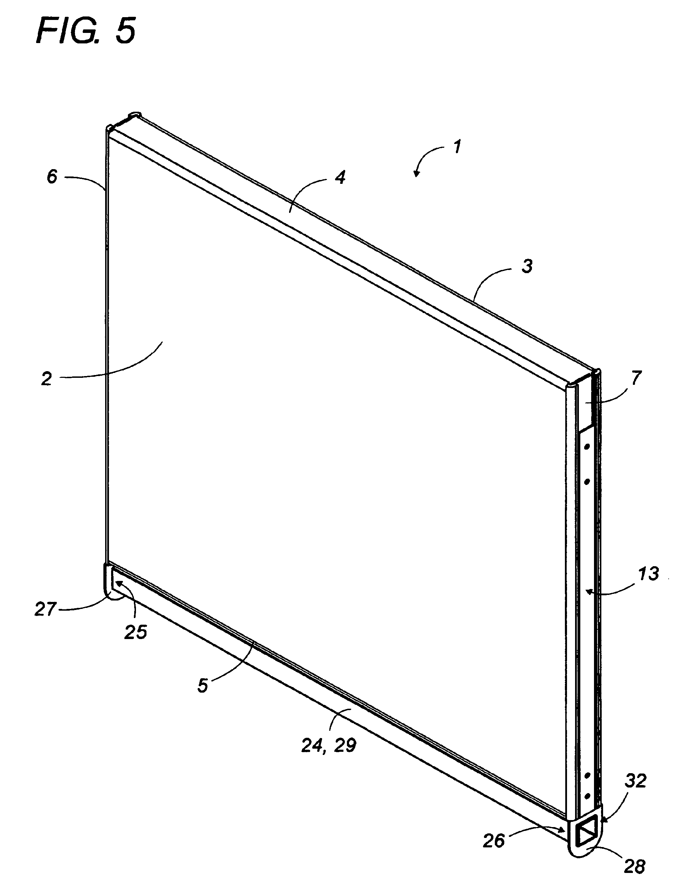

Un deuxième mode de réalisation représenté sur les figures 5, 6 et 7 consiste à placer l'élément longitudinal de torsion 24 à l'extérieur du corps de dossier 1.

Sur les exemples représentés, l'élément longitudinal de torsion 24 est un tube de torsion 29 déporté vers le bas, sous le corps 1 de dossier en matière plastique soufflée.

Dans ce cas, la liaison entre les extrémités 25 et 26 du tube de torsion 29 et les armatures latérales de chant 12 et 13 peut se faire par l'intermédiaire de pièces additionnelles : les pièces intermédiaires de liaison 27 et 28.

Ces pièces intermédiaires de liaison 27 et 28 prolongent les extrémités inférieures des armatures latérales de chant 12 et 13 et s'étendent vers le bas sous le corps de dossier en direction du tube de torsion 29.

Les ouvertures de réception 31 et 32 sont ménagées dans ces pièces intermédiaires de liaison 27, 28 pour recevoir à immobilisation les extrémités 25 et 26 du tube de torsion 29 et assurer ainsi la liaison entre le tube de torsion 29 et les armatures latérales de chant 12, 13 garantissant une bonne transmission des efforts.

Les pièces intermédiaires de liaison 27, 28 sont solidarisées à la partie inférieure des armatures latérales de chant 12, 13 par tout moyen approprié, par exemple par vissage, boulonnage, rivetage ou soudage.

Elles peuvent être fixées aux armatures latérales avant que celles-ci ne soient ancrées au corps 1 de dossier lors du moulage par soufflage.

Alternativement, elles peuvent être montées postérieurement au moulage, la zone de jonction de ces pièces intermédiaires pouvant par exemple être glissée dans un logement ménagé à cet effet lors du moulage au moyen d'un tiroir. Avantageusement, le tube de torsion 29 peut être déjà monté sur les pièces intermédiaires de liaison 27 et 28 lorsque ces dernières sont solidarisées aux armatures latérales de chant 12 et 13.

Ces pièces intermédiaires de liaison 27 et 28 peuvent également être directement moulées d'une pièce avec les armatures latérales de chant 12 et 13 lorsque ces dernières sont en matière plastique rigide.

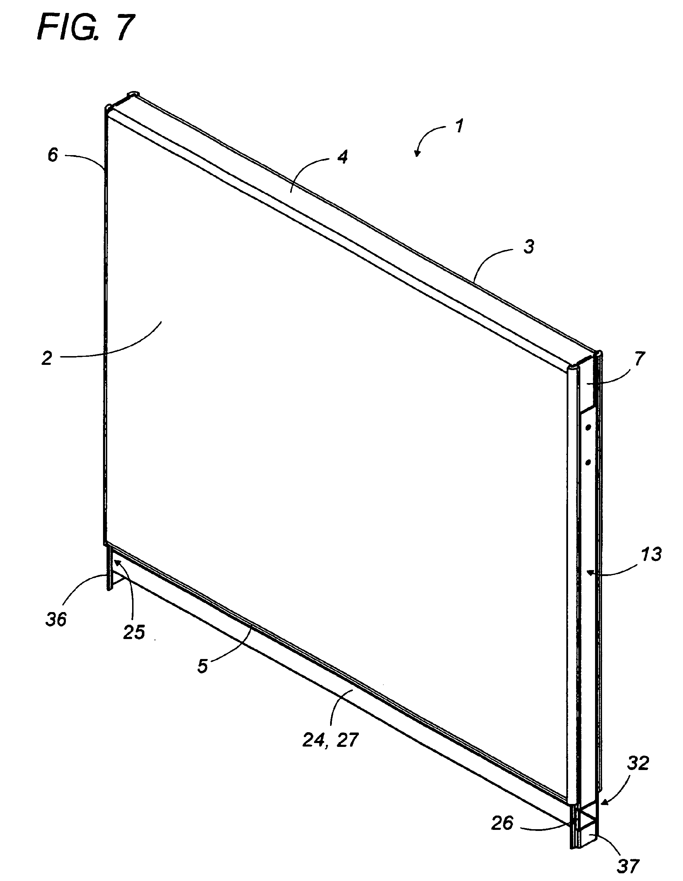

Selon une autre variante représentée sur la figure 7, les extrémités 25 et 26 de l'élément longitudinal de torsion 24 sont directement reliées aux armatures latérales de chant 12 et 13 au niveau de prolongations 36 et 37 de ces armatures s'étendant au-delà du corps 1 de dossier en matière plastique soufflé et dans ce cas vers le bas.

Comme précédemment des ouvertures de réception 31 et 32 peuvent préférentiellement être prévues au niveau de ces prolongations 36 et 37 pour loger les extrémités 25 et 26 de l'élément longitudinal de torsion 24.

L'invention n'est cependant pas limitée à un raccordement de ce type, d'autres moyens de liaison pouvant évidemment être imaginés par l'homme du métier entre l'élément longitudinal de torsion 24 et les armatures de chant 12, 13 ou les pièces intermédiaires de liaison 27, 28, si compris dans le cadre de l'invention telle que définie par les revendications.

De même, lorsque l'élément longitudinal de torsion 24 est situé en dehors du corps de dossier 1 en matière plastique, il n'est pas forcément situé en dessous de celui-ci, mais peut également être déporté vers l'avant ou vers l'arrière du corps 1 de dossier tout en restant au niveau de sa zone inférieure.

Un troisième mode de réalisation de l'élément longitudinal de torsion 24 a été représenté sur les figures 8 et 9.

Il s'agit cette fois d'un tube de torsion 29 de section circulaire, s'étendant à l'intérieur du corps 1 de dossier, dans une partie libre du volume intérieur creux 8 du corps 1 ou un logement 30 de forme adaptée, situé en partie inférieure du corps 1.

Les extrémités 25, 26 du tube de torsion 29 traversent les ouvertures de réception 31 et 32 des armatures latérales de chant 12, 13 correspondantes, pour assurer une liaison entre l'élément longitudinal de torsion 24 et les armatures latérales de chant 12, 13.

Le tube de torsion 29 est bloqué en rotation et longitudinalement par exemple au moyen de petits bourrelets 33 de matière plastique, réalisés lors du moulage par soufflage.

Dans cette variante, une pièce d'emmanchement 38 de forme complémentaire a été engagée à force à l'intérieur de chaque extrémité du tube de torsion 29 et vient, de préférence, affleurer au niveau de cette extrémité. Cette pièce d'emmanchement 38 peut alternativement être collée ou soudée ou immobilisée à l'intérieur du tube de torsion 29 par tout moyen imaginable.

Cette pièce d'emmanchement 38, qui peut être pleine ou creuse, comporte un logement 39, de préférence sensiblement cylindrique ou hexagonal et pouvant être centré ou excentré, qui permet de recevoir une tige 40 dont l'extrémité saillante 41 sert de bout d'axe de pivotement 23 pour la charnière latérale 19.

La tige 40 peut être par exemple une vis ou une tige filetée sur toute sa longueur ou sur une partie seulement de celle-ci, qui est immobilisée dans la pièce d'emmanchement 38 par vissage direct dans la paroi de son logement 39 ou au moyen d'un écrou dormant 42 fixé par collage ou tout autre moyen à l'arrière de la pièce d'emmanchement 38.

L'extrémité saillante 41 de la tige 40, qui dépasse au-delà du tube de torsion 29 et du corps de dossier 1, est engagée à libre pivotement dans une ouverture 43 d'un support 44 fixé à la carrosserie du véhicule ou faisant partie de celle-ci, et y est retenue par un écrou ou sa tête de vis 45.

Grâce à cette possibilité de libre pivotement, le dossier de siège peut être facilement incliné ou rabattu entre ses deux positions limites caractéristiques : droite relevée et couchée rabattue.

Là encore, les charnières latérales 18 et 19 sont fermement fixées par une liaison directe à l'élément longitudinal de torsion 24 extrêmement rigide, et non à la matière plastique soufflée du corps de dossier, ce qui assure une fixation beaucoup plus solide et une répartition des efforts sur toute la longueur de l'élément longitudinal de torsion.

De manière évidente, l'invention ne se limite pas aux modes de réalisation préférentiels décrits précédemment et représentés sur les différentes figures, l'homme du métier pouvant y apporter de nombreuses modifications et imaginer d'autres variantes si comprises dans le cadre de l'invention telle que définie par les revendications.

Ainsi par exemple, pour renforcer encore la rigidité du corps de dossier 1 selon l'invention, celui-ci peut comporter en outre, dans son volume intérieur creux 8, un ou plusieurs tube(s) supplémentaire(s), sensiblement vertical(aux) et relié(s) en partie inférieure à l'élément longitudinal de torsion 24. Un tel tube sera de préférence disposé entre le siège central et le siège latéral dans le cas d'un corps de dossier de banquette 2/3.

En plus d'améliorer la résistance à la torsion du corps de dossier de siège, Ce ou ces tube(s) supplémentaire(s) apporte(nt) une meilleure résistance à la perforation en cas de choc arrière provoqué par un bagage lourd en provenance du coffre du véhicule. Il permet aussi avantageusement de conserver une hauteur sensiblement constante pour le corps de dossier de siège malgré l'effort de traction dirigé vers le bas exercé par la ceinture de sécurité en cas d'accident.

## Revendications

1. Corps (1) de dossier rabattable de siège de véhicule, notamment automobile, corps (1) creux et de forme globalement plane, réalisé en matière plastique par un procédé de moulage par soufflage, comprenant une paroi avant (2) et une paroi arrière (3), réunies par un chant supérieur (4), un chant inférieur (5) et deux chants latéraux (6, 7), l'ensemble de ces parois et de ces chants délimitant un volume intérieur creux (8) fermé, corps (1) de dossier rabattable comportant une armature latérale de chant (12, 13) rigide sur chacun de ses chants latéraux (6, 7), **caractérisé en ce qu'**il comporte un élément longitudinal de torsion (24), disposé en partie inférieure, dont les extrémités (25, 26) sont reliées chacune à l'armature latérale de chant (12, 13) correspondante ; et **en ce que** les armatures latérales de chant (12, 13) ne sont reliées entre elles qu'en partie inférieure du corps de siège par l'intermédiaire de l'élément longitudinal de torsion (24).

2. Corps (1) de dossier rabattable selon la revendication 1 **caractérisé en ce que** les armatures latérales de chant (12, 13) s'étendent sur sensiblement toute la longueur de ses chants latéraux (6, 7).

3. Corps (1) de dossier rabattable selon l'une quelconque des revendications précédentes **caractérisé en ce que** les armatures latérales de chant (12, 13) sont métalliques ou réalisées en matière plastique rigide.

4. Corps (1) de dossier rabattable selon l'une quelconque des revendications précédentes **caractérisé en ce que** les deux armatures latérales de chant (12, 13) sont identiques, symétriques ou similaires.

5. Corps (1) de dossier rabattable selon l'une quelconque des revendications précédentes **caractérisé en ce que** les armatures latérales de chant (12, 13) sont de forme générale plate et présentent des bords longitudinaux d'ancrage (14, 15) incurvés.

6. Corps (1) de dossier rabattable selon l'une quelconque des revendications précédentes **caractérisé en ce que** les armatures latérales de chant (12, 13) sont solidarisées au corps de dossier de siège (1) lors de son moulage par soufflage.

7. Corps (1) de dossier rabattable selon l'une quelconque des revendications précédentes **caractérisé en ce qu'**il comporte des moyens de fixation (16) au véhicule et **en ce que** ces moyens de fixation (16) sont rapportés sur ou réalisés d'une pièce avec les armatures latérales de chant (12, 13) ou l'élément longitudinal de torsion (24).

8. Corps (1) de dossier rabattable selon l'une quelconque des revendications précédentes **caractérisé en ce que** l'élément longitudinal de torsion (24) est situé à l'intérieur du corps de dossier (1) ou placé à l'extérieur de celui-ci.

9. Corps (1) de dossier rabattable selon la revendication précédente **caractérisé en ce que** l'élément longitudinal de torsion (24) est déporté vers le bas en dessous du corps de dossier (1).

10. Corps (1) de dossier rabattable selon l'une quelconque des revendications précédentes **caractérisé en ce que** les extrémités (25, 26) de l'élément longitudinal de torsion (24) sont reliées aux armatures latérales de chant (12, 13) directement ou au moyen de pièces intermédiaires de liaison (27, 28).

11. Corps (1) de dossier rabattable selon la revendication précédente **caractérisé en ce que** les extrémités (25, 26) de l'élément longitudinal de torsion (24) sont reliées aux armatures latérales de chant (12, 13) au niveau de prolongations (36, 37) de ces armatures s'étendant au-delà du corps de dossier (1).

12. Corps (1) de dossier rabattable selon la revendication 10 ou 11 **caractérisé en ce que** les extrémités (25, 26) de l'élément longitudinal de torsion (24) sont logées à immobilisation dans des ouvertures de réception (31, 32) ménagées dans les armatures latérales de chant (12, 13) ou les pièces intermédiaires de liaison (27, 28).

13. Corps (1) de dossier rabattable selon l'une quelconque des revendications précédentes **caractérisé en ce que** l'élément longitudinal de torsion (24) est un tube de torsion (29) de section ronde, ovale, carrée ou rectangulaire.

14. Corps (1) de dossier rabattable selon la revendication précédente **caractérisé en ce qu'**il comporte un bouchon d'obturation (34, 35) ou une pièce d'emmanchement (38) à chaque extrémité (25, 26) du tube de torsion (29).

15. Corps (1) de dossier rabattable selon les revendications 7 et 14 **caractérisé en ce qu'**une charnière latérale (18, 19) servant de moyen de fixation (16) au véhicule est rapportée sur ou réalisée d'une pièce avec chacun des bouchons d'obturation (34, 35) ou chacune des pièces d'emmanchement (38).

16. Corps (1) de dossier rabattable selon l'une quelconque des revendications précédentes **caractérisé en ce que** l'élément longitudinal de torsion (24) est bloqué longitudinalement.

17. Siège escamotable pour véhicule notamment automobile comportant une assise et un dossier rabattable **caractérisé en ce que** le dossier rabattable comprend un corps (1) de dossier selon l'une quelconque des revendications précédentes.

## Claims

1. Tilting backrest body (1) for a vehicle seat, most particularly a motor vehicle, hollow body (1) with a globally flat form, made in plastic by a blow moulding process, comprising a front wall (2) and a rear wall (3), joined by an upper edge (4), a lower edge (5) and two lateral edges (6, 7), the entirety of these walls and edges delimiting a closed hollow inner volume (8), tilting backrest body (1) including a rigid edge lateral structure (12, 13) over each one of its lateral edges (6, 7), **characterized in that** it includes a longitudinal torsion element (24), arranged in the lower part, each of which ends (25, 26) are joined to the corresponding lateral edge structures (12, 13); and **in that** the lateral edge structures (12, 13) are only joined to each other in the lower part of the seat body by means of the longitudinal torsion element (24).

2. Tilting backrest body (1) according to claim 1 **characterized in that** the lateral edge structures (12, 13) extend sensibly over the entire length of its lateral edges (6, 7).

3. Tilting backrest body (1) according to any of the preceding claims **characterized in that** the lateral edge structures (12, 13) are metallic or made of rigid plastic.

4. Tilting backrest body (1) according to any of the preceding claims **characterized in that** both lateral edge structures (12, 13) are identical, similar or symmetrical.

5. Tilting backrest body (1) according to any of the preceding claims **characterized in that** the lateral edge structures (12, 13) have a generally flat form and present bent anchorage longitudinal edges (14, 15).

6. Tilting backrest body (1) according to any of the preceding claims **characterized in that** the lateral edge structures (12, 13) are joined to the seat backrest body (1) during its blow moulding.

7. Tilting backrest body (1) according to any of the preceding claims **characterized in that** it includes fastening means (16) to the vehicle and **in that** these fastening means (16) are brought onto or made of one piece with the lateral edge structures (12, 13) or the longitudinal torsion element (24).

8. Tilting backrest body (1) according to any of the preceding claims **characterized in that** the longitudinal torsion element (24) is placed inside the backrest body (1) or placed on the outside of the latter.

9. Tilting backrest body (1) according to the preceding claim **characterized in that** the longitudinal torsion element (24) is brought down below the backrest body (1).

10. Tilting backrest body (1) according to any of the preceding claims **characterized in that** the ends (25, 26) of the longitudinal torsion element (24) are joined to the lateral edge structures (12, 13) directly or by means of intermediate connection pieces (27, 28).

11. Tilting backrest body (1) according to the previous claim **characterized in that** the ends (25, 26) of the longitudinal torsion element (24) are joined to the lateral edge structures (12, 13) at the level of these structures elongations (36, 37) extending beyond the backrest body (1).

12. Tilting backrest body (1) according to claim 10 or 11 **characterized in that** the ends (25, 26) of the longitudinal torsion element (24) are located in an immobilized form in the reception openings (31, 32) realized in the lateral edge structures (12, 13) or the intermediate connection pieces (27, 28).

13. Tilting backrest body (1) according to any of the preceding claims **characterized in that** the longitudinal torsion element (24) is a torsion tube (29) with a round, oval, rectangular or squared section.

14. Tilting backrest body (1) according to the previous claim **characterized in that** it includes a sealing plug (34, 35) or a hanging piece (38) on each end (25, 26) of the torsion tube (29).

15. Tilting backrest body (1) according to claims 7 and 14 **characterized in that** a lateral hinge (18, 19) serving as a fastening mean (16) on the vehicle is brought onto or made of one piece with each one of the sealing plugs (34, 35) or each one of the hanging pieces (38).

16. Tilting backrest body (1) according to any of the preceding claims **characterized in that** the longitudinal torsion element (24) is longitudinally blocked.

17. Retractable seat for a vehicle, most particularly a motor engine including a seat and a tilting backrest **characterized in that** the tilting backrest includes a backrest body (1) according to any of the preceding claims.

## Patentansprüche

1. Klappbarer Lehnenkörper (1) für einen Fahrzeugsitz, insbesondere für einen Personenkraftwagen, und zwar ein Hohlkörper (1) von einer insgesamt ebenen Form, hergestellt aus Kunststoff durch ein Blasformverfahren, der eine Vorderwand (2) und eine Hinterwand (3) umfasst, die aus einer Oberkante (4), einer Unterkante (5) und zwei Seitenkanten (6, 7) zusammengesetzt sind, wobei die Einheit dieser Wände und dieser Kanten einen geschlossenen, hohlen Innenraum (8) begrenzen, der klappbare Lehnenkörper (1) eine starre Seitenkantenarmierung (12, 13) auf jeder der Seitenkanten (6, 7) aufweist, **gekennzeichnet dadurch, dass** er ein Längsdrehelement (24) umfasst, das im unteren Teil angeordnet ist, dessen Enden (25, 26) jeweils mit der entsprechenden Seitenkantenarmierung (12, 13) verbunden sind; sowie **dadurch**, dass die Seitenkantenarmierungen (12, 13) nur im Unterteil des Sitzkörpers mittels des Längsdrehelements (24) miteinander verbunden sind.

2. Klappbarer Lehnenkörper (1) nach Anspruch 1, **gekennzeichnet dadurch, dass** sich die Seitenkantenarmierungen (12, 13) über die im Wesentlichen gesamte Länge von deren Seitenkanten (6, 7) erstrecken.

3. Klappbarer Lehnenkörper (1) nach einem der vorangehenden Ansprüche, **gekennzeichnet dadurch, dass** die Seitenkantenarmierungen (12, 13) metallisch sind oder aus starrem Kunststoff hergestellt sind.

4. Klappbarer Lehnenkörper (1) nach einem der vorangehenden Ansprüche, **gekennzeichnet dadurch, dass** die beiden Seitenkantenarmierungen (12, 13) identisch, symmetrisch oder ähnlich sind.

5. Klappbarer Lehnenkörper (1) nach einem der vorangehenden Ansprüche, **gekennzeichnet dadurch, dass** die Seitenkantenarmierungen (12, 13) von einer im Allgemeinen flachen Form sind und gebogene Längsverankerungsränder (14, 15) aufweisen.

6. Klappbarer Lehnenkörper (1) nach einem der vorangehenden Ansprüche, **gekennzeichnet dadurch, dass** die Seitenkantenarmierungen (12, 13) bei der Blasformung einteilig mit dem Sitzlehnenkörper (1) verbunden werden.

7. Klappbarer Lehnenkörper (1) nach einem der vorangehenden Ansprüche, **gekennzeichnet dadurch, dass** dieser Befestigungselemente (16) am Fahrzeug umfasst, sowie **dadurch** dass, diese Befestigungselemente (16) an die Seitenkantenarmierungen (12, 13) angesetzt oder einteilig mit diesen oder dem Längsdrehelement (24) hergestellt sind.

8. Klappbarer Lehnenkörper (1) nach einem der vorangehenden Ansprüche, **gekennzeichnet dadurch, dass** das Längsdrehelement (24) im Inneren des Lehnenkörpers (1) liegt oder an der Außenseite desselben platziert ist.

9. Klappbarer Lehnenkörper (1) nach dem vorangehenden Anspruch, **gekennzeichnet dadurch, dass** das Längsdrehelement (24) nach unten unterhalb des Lehnenkörpers (1) versetzt ist.

10. Klappbarer Lehnenkörper (1) nach einem der vorgehenden Ansprüche, **gekennzeichnet dadurch, dass** die Enden (25, 26) des Längsdrehelements (24) direkt mit den Seitenkantenarmierungen (12, 13) oder mittels Zwischenverbindungsstücke (27, 28) verbunden sind.

11. Klappbarer Lehnenkörper (1) nach dem vorangehenden Anspruch, **gekennzeichnet dadurch, dass** die Enden (25, 26) des Längsdrehelements (24) mit den Seitenkantenarmierungen (12, 13) auf der Ebene der Verlängerungen (36, 37) dieser Armierungen, die sich über den Lehnenkörper (1) hinweg erstrecken, verbunden sind.

12. Klappbarer Lehnenkörper (1) nach Anspruch 10 oder 11 **gekennzeichnet dadurch, dass** die Enden (25, 26) des Längsdrehelements (24) in den Aufnahmeöffnungen (31, 32) festliegend untergebracht sind, die in den Seitenkantenarmierungen (12, 13) oder den Zwischenverbindungsstücken (27, 28) angeordnet sind.

13. Klappbarer Lehnenkörper (1) nach einem der vorangehenden Patentansprüche, **gekennzeichnet dadurch, dass** das Längsdrehelement (24) ein Torsionsrohr (29) von rundem, ovalem, viereckigem oder rechteckigem Schnitt ist.

14. Klappbarer Lehnenkörper (1) nach dem vorangehenden Anspruch, **gekennzeichnet dadurch, dass** dieser einen Verschlussstopfen (34, 35) oder ein Aufpressstück (38) an jedem Ende (25, 26) des Torsionsrohrs (29) umfasst.

15. Klappbarer Lehnenkörper (1) nach den Ansprüchen 7 und 14, **gekennzeichnet dadurch, dass** ein seitliches Scharnier (18, 19), das als Befestigungselement (16) am Fahrzeug dient, auf jeden der Verschlussstopfen (34, 35) oder jedes der Aufpressstücke (38) aufgebracht ist oder einstückig mit diesen hergestellt ist.

16. Klappbarer Lehnenkörper (1) nach einem der vorangehenden Ansprüche, **gekennzeichnet dadurch, dass** das Längsdrehelement (24) in der Längsrichtung blockiert ist.

17. Ausziehbarer Fahrzeugsitz, insbesondere für einen Personenkraftwagen mit einem Sitz und einer klappbaren Lehne, **gekennzeichnet dadurch, dass** die klappbare Lehne einen Lehnenkörper (1) nach einem der vorangehenden Ansprüche umfasst.
